**Europäisches Patentamt**

**European Patent Office**

**Office européen des brevets**

(19)

(11) Veröffentlichungsnummer : **0 380 717 B1**

# (12) EUROPÄISCHE PATENTSCHRIFT

(45) Veröffentlichungstag der Patentschrift :
**15.04.92 Patentblatt 92/16**

(51) Int. Cl.$^5$ : **B62D 53/12**

(21) Anmeldenummer : **89101518.2**

(22) Anmeldetag : **28.01.89**

---

(54) **Sattelkupplung.**

---

(43) Veröffentlichungstag der Anmeldung :
**08.08.90 Patentblatt 90/32**

(45) Bekanntmachung des Hinweises auf die
Patenterteilung :
**15.04.92 Patentblatt 92/16**

(84) Benannte Vertragsstaaten :
**AT BE CH DE ES FR GB GR IT LI LU NL SE**

(56) Entgegenhaltungen :
**PATENT ABSTRACTS OF JAPAN, Band 9, Nr.
46 (M-360)[1769], 27. Februar 1985; & JP-A-59
184 069 (KYOKUTO KAIHATSU KOGYO K.K.)
19-10-1984**

(56) Entgegenhaltungen :
**PATENT ABSTRACTS OF JAPAN, Band 9, Nr.
46 (M-360)[1769], 27. Februar 1985; & JP-A-59
184 068 (KYOKUTO KAIHATSU KOGYO K.K.)
19-10-1984
PATENT ABSTRACTS OF JAPAN, Band 7, Nr.
199 (M-240)[1344], 3. September 1983; & JP-
A-58 97 572 (SHINMEIWA KOGYO K.K.) 10-
06-1983**

(73) Patentinhaber : **Hunger, Walter, Dr.-Ing.
Otto-Nagler-Strasse 13
W-8700 Würzburg (DE)**

(72) Erfinder : **Hunger, Walter, Dr.-Ing.
Otto-Nagler-Strasse 13
W-8700 Würzburg (DE)**

(74) Vertreter : **Nix, Frank Arnold, Dr.
Kröckelbergstrasse 15
W-6200 Wiesbaden (DE)**

EP 0 380 717 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung bezieht sich auf eine Sattelkupplung nach dem Oberbegriff des Patentanspruchs 1. Eine solche Sattelkupplung ist aus US-A-3 352 571 oder JP-A-58 97 572 bekannt.

Ein Vorteil dieser Sattelkupplungen, bei denen der Königszapfen des Sattelaufliegers im Fahrbetrieb von den Halbkreisausnehmungen der Schließbacken umschlossen ist, ist es, daß die berührungsfläche zwischen den Schließbacken und dem Königszapfen groß ist und deshalb nur kleine Flächenpressungen auftreten. Andererseits sind die bekannten Sattelkupplungen nicht sehr bequem im Gebrauch.

Bei der aus US-A-3 352 571 bekannten Ausbildung werden die Schließbacken in ihrer Schließstellung durch einen quer zur Fahrtrichtung vorschiebbaren Riegelstab gehalten, was die Konstruktion aufwendig und voluminös macht. Ein automatischer Ablauf des Schließens und Öffnens ist hier nicht möglich.

Ähnliches gilt für die aus JP-A-58 97 572 bekannte Ausbildung, bei der zwar die Schließbacken durch eine Servoeinrichtung betätigt werden, welche aber ebenfalls sehr kompliziert ist. Diese enthält einen Pneumatikzylinder, der über eine Kurvennutscheibe eine gabelförmige Sperrvorrichtung in Fahrtrichtung verschiebt, welche die Schließbacken in deren Schließstellung festlegen.

Bei dieser Ausbildung ist der Pneumatikzylinder wegen der Kompressibilität der Luft nicht geeignet, die geschlossene Endstellung der Schließbacken zu fixieren. Deshalb muß zusätzlich zur beschriebenen Servoeinrichtung noch eine die Schließstellung der Schließbacken gewährleistende Verriegelungskinematik vorgesehen werden.

Somit ist bei den bekannten Ausbildungen vor allem die Bedienung sehr aufwendig.

Aufgabe der Erfindung ist die Schaffung einer sicheren und zuverlässigen Sattelkupplung, bei der sich die Bedienung einfach und bequem gestaltet.

Die Lösung der gestellten Aufgabe gelingt erfindungsgemäß durch die im kennzeichnenden Teil des Patentanspruchs 1 angegebenen Merkmale.

Bei dieser erfindungsgemäßen Ausbildung geschieht das Öffnen der Schließbacken auf sehr einfache Weise durch Druckbeaufschlagung des Hydraulikzylinders und das Schließen erfolgt völlig automatisch, wenn der Königszapfen des in die Kuppelposition einfahrenden Sattelaufliegers den Stößel eindrückt.

Weitere Ausgestaltungen und Merkmale der Erfindung sind in den Unteransprüchen angegeben.

Die Erfindung wird nachfolgend durch die Beschreibung eines Ausführungsbeispiels anhand der beigegebenen Zeichnungen weiter erläutert. Es zeigt:

Fig. 1 die Ansicht der Kupplungsplatte von unten mit der Verriegelungskinematik des Königszapfens;

Fig. 2 den Schnitt nach Linie II-II in Fig. 1;

Fig. 3 die Verriegelungskinematik in der Verriegelungsstellung;

Fig. 4 die Verriegelungskinematik in der Freigabestellung;

Fig. 5 den Hydraulikzylinder bei der Verriegelungsstellung der Verriegelungskinematik;

Fig. 6 den Hydraulikzylinder bei der Freigabestellung der Verriegelungskinematik und noch nicht entferntem Sattelauflieger;

Fig. 7 den Hydraulikzylinder bei der Freigabestellung der Verriegelungskinematik nach Entfernung des Sattelaufliegers;

Fig. 8 den Hydraulikzylinder nach dem Einfahren des Königszapfens des Sattelaufliegers und noch in der Freigabestellung der Verriegelungskinematik.

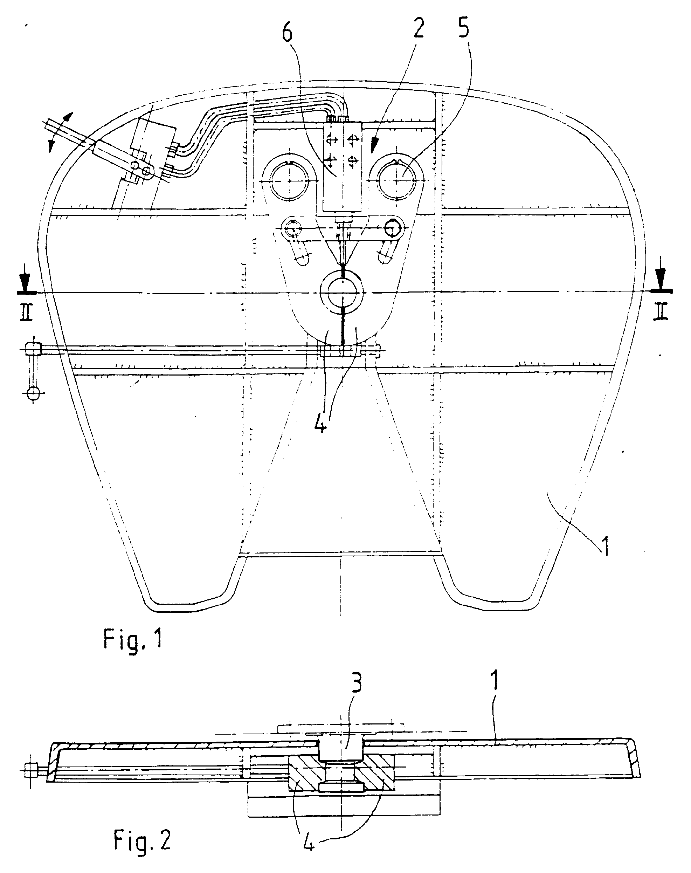

Fig. 1 zeigt die Unterseite der Kupplungsplatte 1 mit der Verriegelungskinematik 2 für den Königszapfen 3 des Sattelaufliegers. Diese Verriegelungskinematik besteht im wesentlichen aus zwei symmetrisch zur Längsebene angeordneten Schließbacken 4, die mittels Gelenkbolzen 5 schwenkbar an der Kupplungsplatte 1 gehalten sind, und einem sie betätigenden Hydraulikzylinder 6. Im hinteren Ende der nach hinten weisenden Schließbacken 4 ist je eine halbkreisförmige Ausnehmung 9 ausgeführt, die sich in geschlossener Stellung der Schließbacken zu einem kreisförmigen Raum ergänzen, in dem der Königszapfen 3 verriegelt ist. Wie insbesondere auf Fig. 1 und 2 ersichtlich, ist der Königszapfen 3 bei geschlossener Stellung der Schließbacken 4 auf seinem gesamten Umfang großflächig erfaßt, so daß die im Betrieb wirkenden Flächenpressungen klein bleiben.

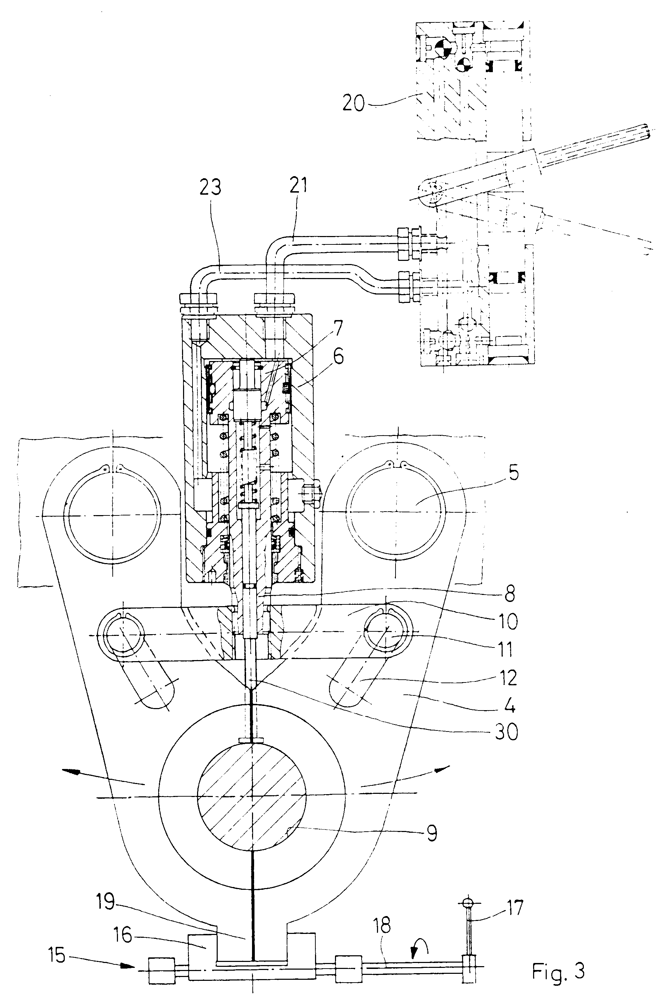

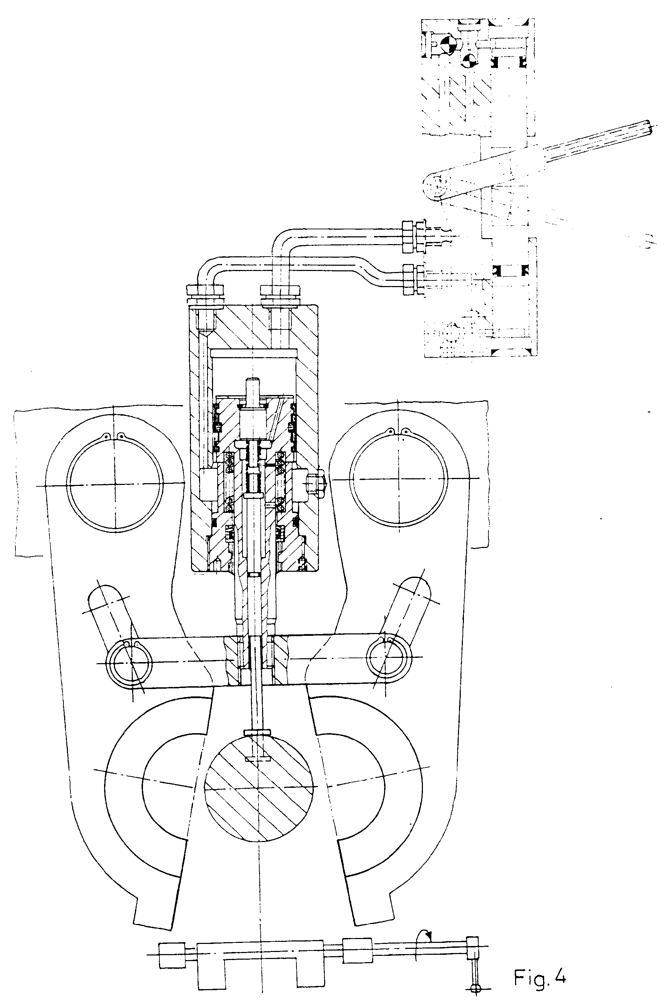

Im Hydraulikzylinder 6 sitzt verschieblich ein Betätigungskolben 7, dessen nach hinten weisende Betätigungskolbenstange 8 an ihrem Ende eine Querstange 10 trägt, an deren Enden Gleitsteine 11 befestigt sind, die in Gleitnuten 12 der Schließbacken 4 geführt sind. Diese sind derart gerichtet, daß beim Ausfahren der Betätigungskolbenstange 8 die Schließbacken 4 sich öffnen und umgekehrt beim Einfahren der Betätigungskolbenstange sich schließen. Fig. 3 zeigt die geschlossene Verriegelungsstellung und Fig. 4 die offene Freigabestellung, in der der Königszapfen freigegeben ist und der Sattelauflieger weg- bzw. herangefahren werden kann.

Zur Fixierung der Verriegelungsstellung ist am hinteren Ende der Schließbacken 4 eine mechanische Ver-

EP 0 380 717 B1

riegelungsvorrichtung 15 vorgesehen, die im wesentlichen aus einer Klammer 16 besteht, die auf einer mittels eines Schwenkhebels 17 drehbaren Schwenkachse 18 befestigt ist und in ihrer Wirksamkeitsstellung zwei hintere Fortsätze 19 zusammenhält, deren je einer am hinteren Ende der Schließbacken 4 ausgebildet ist.

Zur Druckbeaufschlagung des Hydraulikzylinders 6 dient eine doppeltwirkende Handpumpe 20, deren Druckleitung 21 zum Druckanschluß 22 des Hydraulikzylinders und deren Rücklaufleitung 23 zum Rückflußanschluß 24 des Hydraulikzylinders führt.

Innerhalb der Betätigungskolbenstange sitzt verschieblich in einer zentralen Bohrung ein Stößel 30, dessen hinteres Ende im ausgefahrenen Zustand des Stößels in den vom Königszapfen 3 eingenommenen Raum ragt und der in noch zu beschreibender Weise beim Ankuppeln eines Sattelaufliegers wirksam wird, wenn er vom Königszapfen eingestoßen wird.

Der Hydraulikzylinder 6 besteht aus einem Zylinderkörper 33 und einem in dessen hinterem Ende befestigten Deckel 34, in dem die Betätigungskolbenstange 8 abgedichtet geführt ist. Die Stangendichtungen sind ebensowenig wie die Kolbendichtungen mit Bezugszeichen versehen. Der Druckanschluß 22 mündet in den Kolbenbodenraum 35 und der Rückflußanschluß 24 über eine seitliche Axialbohrung 36 in den Kolbenstangenraum 37. In dessen Bereich ist in der Zylinderwand ein Entlüftungsstopfen 38 vorgesehen, der einen luftdurchlässigen Sintermetalleinsatz enthält und sich in der waagerechten Einbaulage des Hydraulikzylinders 6 oben befindet.

Zwischen der rückwärtigen Ringfläche des Kolbens 7 und der inneren Fläche des Deckels 34 ist eine die Betätigungskolbenstange 8 umfassende kräftige Verriegelungsfeder 40 eingesetzt, welche den Kolben im Sinne des Einfahrens beaufschlagt.

Der Betätigungskolben 7 bildet zusammen mit der Betätigungskolbenstange 8 ein einstückiges Teil, in dem eine doppelt abgestufte Zentralbohrung 42 ausgeführt ist. Im vorderen weitesten Abschnitt sitzt verschieblich ein Steuerschieber 43. Der vordere Absatz 44 an der ersten Durchmesserabstufungsstelle dient als rückwärtiger Anschlag für den Steuerschieber 43.

Im hinteren engsten Abschnitt ist der Stößel 30 geführt. Dieser hat einen Bund 45, der im Bereich des mittleren Abschnitts der Zentralbohrung 42 liegt und dessen Außenfläche mit der Innenfläche dieses Abschnitts einen ringförmigen Drosselspalt 46 bildet. Der hintere Absatz 47 wirkt als Anschlag für den Bund 45.

Zwischen dem Bund 45 und der hinteren Stirnfläche des Steuerschiebers 43 ist eine relativ schwache Stößelfeder 48 eingesetzt, die die beiden Teile auseinanderzutreiben sucht. Am vorderen Ende des Steuerschiebers 43 ist ein Anschlagfortsatz 50 ausgebildet, der in der relativ zum Betätigungskolben 7 vorderen Stellung des Steuerschiebers 43 über den Kolbenboden vorragt.

Zur Begrenzung der Ausfahrbewegung und Festlegung dieser vorderen Relativstellung ist in der Nähe des vorderen Endes der Zentralbohrung 42 ein Sprengring 51 in eine Eindrehung eingesetzt.

Im Betätigungskolben 7 ist ein vom Kolbenboden ausgehender Überströmkanal 54 ausgebildet, der zu einer Eindrehung 55 führt, welche vom Steuerschieber 43 in dessen hinterer Relativstellung verschlossen ist. Im mittleren Abschnitt der Zentralbohrung 42 sind zwei Querbohrungen ausgeführt, welche das Innere der Zentralbohrung 42 mit dem Kolbenstangenraum 37 verbinden, und zwar eine enge Drosselbohrung 56 in der Nähe des vorderen Absatzes 44 und eine weitere Überstrombohrung 57 im weiter hinten gelegenen Bereich des Mittelabschnitts.

Die beschriebene Sattelkupplung funktioniert wie folgt:

Im Fahrbetrieb umschließen die Ausnehmungen 9 der Schließbacken 4 den Königszapfen 3 und verriegeln ihn. Diese Verriegelungsstellung der Schließbacken ist ihrerseits durch die mechanische Verriegelungsvorrichtung 15 gesichert, die sich in der aus Fig. 3 ersichtlichen Stellung befindet, in der die Fortsätze 19 durch die Klammer 16 zusammengehalten sind.

Zum Absatteln des Sattelaufliegers von der Zugmaschine wird zunächst durch Schwenken des Schwenkhebels 17 die Klammer 16 in die Freigabestellung verschwenkt. Danach wird die Handpumpe 20 betätigt, so daß Druckflüssigkeit in die Druckleitung 21 gepumpt wird, welche den Kolbenbodenraum 35 beaufschlagt.

Der sich im Kolbenbodenraum 35 aufbauende Druck beginnt, den Betätigungskolben nach hinten zu schieben, so daß die Betätigungskolbenstange 8 ausfährt und über die Querstange 10 und die Gleitsteine 11 die Schließbacken 4 auseinanderschwenkt. Der Druck im Kolbenbodenraum 35 hält den Steuerschieber 43 entgegen der Wirkung der Stößelfeder 48 im Anschlag am vorderen Absatz 44, und zwar auch während der Kolbenbewegung, während der sich die Stößelfeder 48 deswegen zusammendrückt, weil der Stößel 30, dessen hinteres Ende sich im Anschlag am Königszapfen befindet, die Ausfahrbewegung nicht mitmacht.

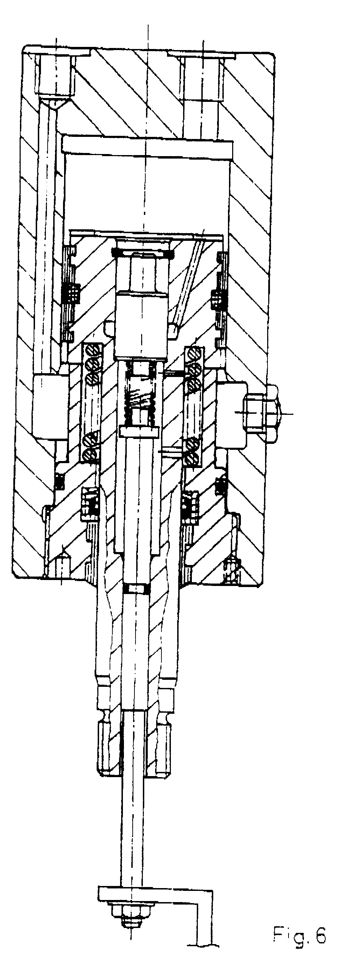

Die Lage der Teile bei Beendigung des beschriebenen Ausfahrens ist aus Fig. 4 und 6 ersichtlich: Während der Stößel 30 seine Lage beibehalten hat, ist die Betätigungskolbenstange 8 ausgefahren und hat die Schließbacken 4 geöffnet. Der Königszapfen 3 ist freigegeben und die Zugmaschine kann vom aufgebockten Sattelauflieger wegfahren.

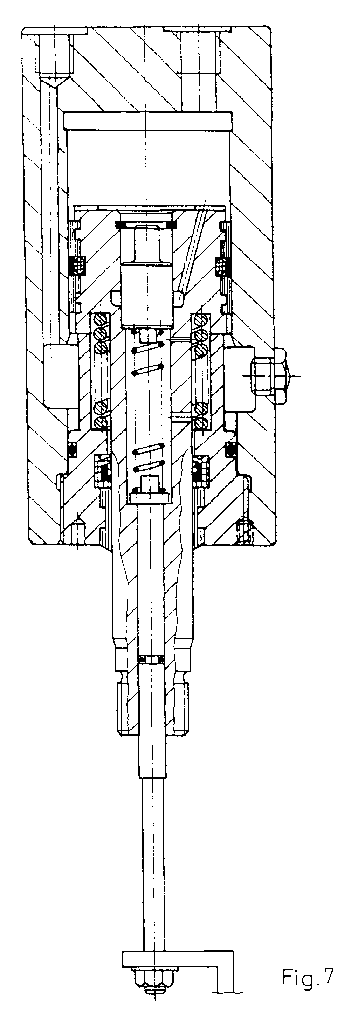

Bei dieser Entfernung des Königszapfens von der Sattelkupplung fällt der Anschlag des Stößels 30 weg

3

und die Stößelfeder 48 verschiebt den Stößel im Sinne des Ausfahrens in die hintere Relativstellung, die aus Fig. 7 ersichtlich ist. Das Ausfahren des Stößels 30 geschieht gedämpft, weil die hinter dem Bund 45 eingeschlossene Flüssigkeit nur langsam durch den Drosselspalt 46 überströmt.

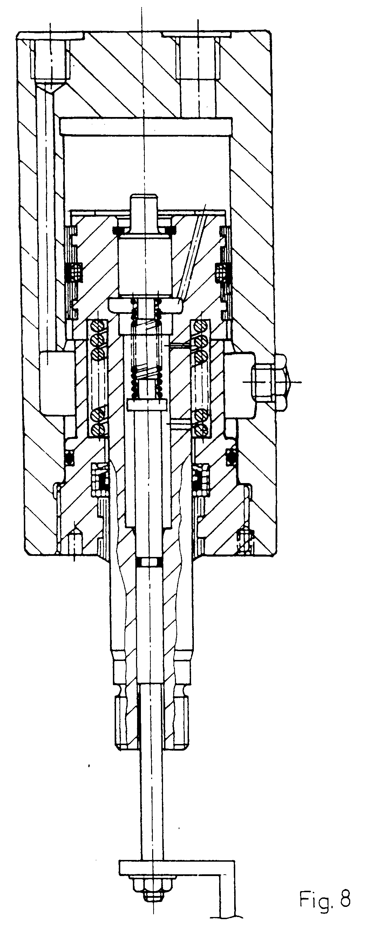

Wenn der Sattelauflieger ausgehend von der in Fig. 7 gezeigten Ausgangslage wieder aufgesattelt werden soll, fährt das Zugfahrzeug heran, bis der Königszapfen in das Ende der Aufnahmebucht der Sattelkupplungsplatte einläuft, wobei der Stößel 30 nach vorn gestoßen wird. Wenn bei dieser Vorwärtsbewegung des Stößels 30 dessen Bund 45 an der Überströmbohrung 57 vorbeiläuft und die im verbleibenden Abschnitt der Zentralbohrung vor dem Bund befindliche Flüssigkeit nur noch durch Überströmen über den Drosselspalt 46 und durch die Drosselbohrung 56 entweichen kann, beginnt sich in diesem Abschnitt ein Druck aufzubauen, der zusammen mit der Stößelfeder 48 ausreicht, den Steuerschieber 43 nach vorn bis zum Anschlag am Sprengring 51 zu schieben. Diese Situation ist in Fig. 8 illustriert.

In dieser Lage des Steuerschiebers 43 relativ zum Betätigungskolben 7 ist die Eindrehung 55 freigegeben, so daß der Überströmkanal 54 in Verbindung mit dem hinteren Bereich der Zentralbohrung 42 und über die Überströmbohrung 57 mit dem Kolbenstangenraum 37 kommt. Dadurch kann der Kolben von der Verriegelungsfeder 40 unter Verdrängung von Flüssigkeit aus dem Kolbenbodenraum 35 in den Kolbenstangenraum 37 vorwärtsgeschoben werden, so daß die Betätigungskolbenstange 8 einfährt und die Schließbacken 4 sich um den Königszapfen schließen.

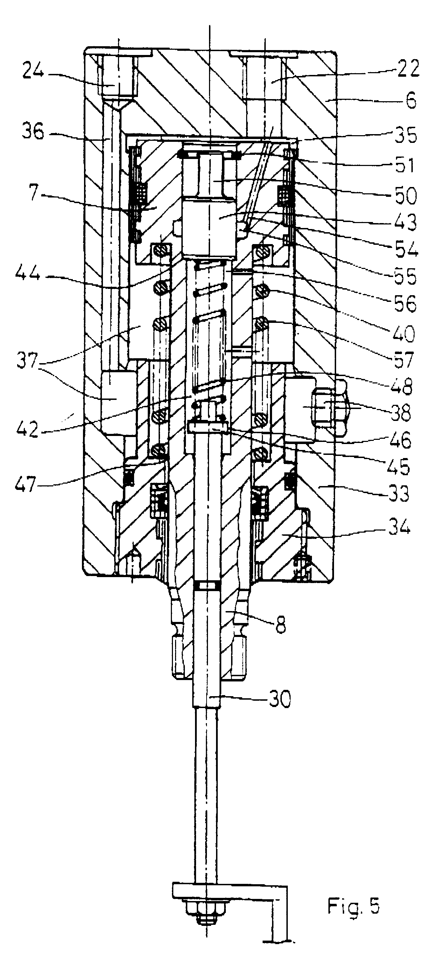

Gegen Ende dieser Bewegung kommt der Anschlagfortsatz 50 des Steuerschiebers 43 in Berührung mit dem Boden des Hydraulikzylinders 6, so daß der Steuerschieber 43 relativ zum Betätigungskolben 7 in diesen eingeschoben wird, bis die Bewegung in der Endstellung des Kolbens 7 zu Ende geht. Damit ist die in Fig. 5 gezeigte Verriegelungsstellung wieder hergestellt.

Es ist noch die mechanische Verriegelungsvorrichtung 15 in ihre Wirksamkeitsstellung zu verschwenken, wonach der Sattelauflieger an der Zugmaschine angekoppelt ist.

Der beim Einfahren ebenso wie beim Ausfahren des Betätigungskolbens erforderliche Volumenausgleich geschieht durch den Sintermetalleinsatz im Entlüftungsstopfen 38. Bei der Betätigung der Handpumpe 20 saugt diese über die Rücklaufleitung 23 die gleiche Flüssigkeitsmenge an, wie sie in die Druckleitung 21 fördert. Da bei der Ausfahrbewegung des Betätigungskolbens 7 mehr Flüssigkeit in den Kolbenbodenraum 35 einströmen muß, als aus dem Kolbenstangenraum 37 verdrängt wird, geschieht der Ausgleich dadurch, daß durch den Entlüftungsstopfen 38 Luft aus der Atmosphäre nachgesaugt wird, die sich in dem Ausdrehungsbereich des Kolbenstangenraums 37 unterhalb des Entlüftungsstopfens 38 sammelt (der in Fig. 3 und 4 der Vollständigkeit wegen eingezeichnete Entlüftungsstopfen befindet sich in Wirklichkeit nicht seitlich, sondern, wie gesagt, oben auf dem waagerecht liegenden Hydraulikzylinder 6).

Beim Einfahren des Betätigungskolbens 7 wird dieses angesammelte Luftausgleichsvolumen wieder durch den Entlüftungsstopfen 38 verdrängt. Auf diese Weise wirkt der Ausdrehungsbereich des Kolbenstangenraums 37 als Hydraulikflüssigkeitsreservoir und ein besonderer Vorratsbehälter für Hydraulikflüssigkeit ist entbehrlich.

Die Schnelligkeit, mit der die beschriebenen Operationen und vor allem das automatische Schließen der Schließbacken erfolgen, wird durch geeignete Wahl der Steifigkeiten der beteiligten Federn und der Drosselstellen festgelegt. Die im Betrieb einer mechanischen Reibung ausgesetzten Flächen der Sattelkupplung, insbesondere die Innenfläche der Ausnehmungen 9 der Schließbacken, sind mit einer geeigneten Antifriktionsbeschichtung versehen.

## Patentansprüche

1. Sattelkupplung zur Verbindung eines Sattelaufliegers mit einem Zugfahrzeug mit zwei in symmetrischer Anordnung schwenkbar angelenkten, den Königszapfen (3) des Sattelaufliegers in der Verriegelungsstellung formschlüssig ergreifenden Schließbacken (4) mit je einer Halbkreisausnehmung (9) zum Erfassen des Königszapfens (3),
gekennzeichnet durch einen die Schließbacken (4) zwischen einer den Königszapfen (3) freigebenden Öffnungsstellung und einer den Königszapfen (3) erfassenden Verriegelungsstellung hin und her schwenkenden Hydraulikzylinder (6),
wobei an der Betätigungskolbenstange (8) des in der Symmetrieebene gelegenen Hydraulikzylinders (6) eine Querstange (10) mit an ihren Enden befestigten Gleitsteinen (11) angebracht ist, welche mit einer in jeder Schließbacke (4) ausgeführten Gleitnut (12) zusammenwirken
und wobei der Betätigungskolben (7) des Hydraulikzylinders (6) auf seiner vorderen Bodenfläche druckbeaufschlagbar und seine hintere stangenseitige Ringfläche durch eine Verriegelungsfeder (40) beaufschlagt ist, und zwischen den Kolbenbodenraum (35) und den Kolbenstangenraum (37) ein von einem Steuerschieber (43) beherrschter Überströmkanal (54) vorgesehen ist, wobei der Steuerschieber (43) verschieblich in einer in Axialrichtung verlaufenden Zentralbohrung (42) im Betätigungskolben (7) und in der Betätigungskolbenstange (8) sitzt und in seiner relativ zum Betätigungskolben (7) vorderen Endstellung den Überströmkanal (54) freigibt, und wobei der Steuerschieber einen nach vorn weisenden Anschlagfortsatz (50) aufweist, der in seiner vorderen relativen Endstellung über den Kolbenboden vorragt, und seine rückwärtige Stirnfläche von einer Stößelfeder (48) beaufschlagt ist, deren anderes Ende sich auf einen Stößel (30) stützt, welcher verschieblich zentral in der Betätigungskolbenstange (8) geführt ist und aus deren hinterem Ende hervor in den Raum des Königszapfens (3) ragt.

2. Sattelkupplung nach Anspruch 1, gekennzeichnet durch einen Bund (45) des Stößels(30), der einen als Drossel wirkenden Ringspalt (46) zwischen seinem Außenumfang und der Wandung der Zentralbohrung (42) bildet.

3. Sattelkupplung nach einem der Ansprüche 1 oder 2, gekennzeichnet durch eine Überströmbohrung (57), die die Zentralbohrung (42) der Betätigungskolbenstange (8) mit dem Kolbenstangenraum (37) verbindet sowie eine weiter vorn gelegene Drosselbohrung (56), die ebenfalls diese beiden Räume verbindet.

4. Sattelkupplung nach einem oder mehreren der Ansprüche 1 bis 3, gekennzeichnet durch einen an oberster Stelle des Kolbenstangenraumes (37) sitzenden Entlüftungsstopfen (38).

5. Sattelkupplung nach Anspruch 4, dadurch gekennzeichnet, daß unterhalb des Entlüftungsstopfens (38) ein Ausdrehungsbereich des Kolbenstangenraums (37) ausgebildet ist.

6. Sattelkupplung nach Ansprüchen 4 oder 5, dadurch gekennzeichnet, daß im Entlüftungsstopfen (38) ein luftfilternder Sintermetalleinsatz sitzt.

7. Sattelkupplung nach einem oder mehreren der vorhergehenden Ansprüche, gekennzeichnet durch eine Handpumpe (20) zur Druckbeaufschlagung des Hydraulikzylinders (6).

8. Sattelkupplung nach einem oder mehreren der vorhergehenden Ansprüche, gekennzeichnet durch eine mechanische Verriegelungsvorrichtung (15) zur Fixierung der Verriegelungsstellung der Schließbacken (4).

9. Sattelkupplung nach Anspruch 8, dadurch gekennzeichnet, daß die mechanische Verriegelungsvorrichtung (15) aus einer Klammer (16) besteht, die in der Verriegelungsstellung zwei hintere Fortsätze (19) umgreift, von denen je einer am hinteren Ende der Schließbacken (4) ausgebildet ist.

10. Sattelkupplung nach Anspruch 9, dadurch gekennzeichnet, daß die Klammer (16) auf einer durch einen Handschwenkhebel (17) drehbaren Schwenkachse (18) sitzt und durch Drehung derselben in die Wirksamkeitsstellung überführbar ist.

## Claims

1. Saddle coupling for connecting a semi-trailer with a traction vehicle, the saddle coupling having two closing jaws (4), which are articulated in a pivotable manner in symmetrical arrangement and which grip the king pin (3) of the semi-trailer in the locking position in a form-closing manner, with a respective semicircular recess (9) for gripping the king pin (3), characterised by a hydraulic cylinder (6) which swings the closing jaws (4) to and fro between an open position releasing the king pin (3) and a locking position gripping the king pin (3), in which there is provided on the operating piston rod (8) of the hydraulic cylinder (6), which is situated in the plane of symmetry, a transverse bar (10) with slide blocks (11) which are secured to its ends and which cooperate with a slide groove (12) which is constructed in each closing jaw (4), and in which it is possible for pressure to be applied to the operating piston (7) of the hydraulic cylinder (6) on its front base area and a locking spring (40) acts upon its rear rod-side annular surface, and there is provided between the piston base space (35) and the piston rod space (37) an overflow channel (54) which is governed by a control slide (43), in which the control slide (43) sits in a displaceable manner in a central bore hole (42), which extends in the axial direction, in the operating piston (7) and in the operating piston rod (8) and in its end position, which is at the front relative to the operating piston (7), frees the overflow channel (54), and in which the control slide has a stop extension (50) which points to the front and projects in its front relative end position over the piston base and upon its rearward face there acts a plunger spring (48), the other end of which is supported on a plunger (30) which is guided in a displaceable manner centrally in the operating piston rod (8) and projects out of the rear end of the latter into the space of the king pin (3).

2. Saddle coupling according to claim 1, characterised by a shoulder (45) of the plunger (30) which forms an annular gap (46) acting as a throttle between its outer periphery and the wall of the central bore hole (42).

3. Saddle coupling according to one of the claims 1 or 2, characterised by an overflow bore hole (57) which connects the central bore hole (42) of the operating piston rod (8) with the piston rod space (37), and also a throttle bore hole (56) which is placed further to the front and which likewise connects these two spaces.

4. Saddle coupling according to one or several of the claims 1 to 3, characterised by a venting plug (38) which sits at the uppermost point of the piston rod space (37).

5. Saddle coupling according to claim 4, characterised in that a recess area of the piston rod space (37) is formed below the venting plug (38).

6. Saddle coupling according to claims 4 or 5, characterised in that an air-filtering sintered metal insert sits in the venting plug (38).

7. Saddle coupling according to one or several of the preceding claims, characterised by a hand pump (20) for applying pressure to the hydraulic cylinder (6).

8. Saddle coupling according to one or several of the preceding claims, characterised by a mechanical locking arrangement (15) for fixing the locking position of the closing jaws (4).

9. Saddle coupling according to claim 8, characterised in that the mechanical locking arrangement (15) consists of a clip (16) which in the locking position embraces two rear extensions (19), each of which is formed at the rear end of the closing jaws (4).

10. Saddle coupling according to claim 9, characterised in that the clip (16) sits on an axis of swing (18) which can be rotated by means of a hand swing lever (17) and by rotation of the same can be transferred into the effective position.


**Revendications**

1. Attelage à sellette pour l'accouplement d'une semi-remorque à un tracteur comportant deux mâchoires (4) montées avec possibilité de pivotement et disposées symétriquement qui bloquent par complémentarité de formes le pivot maître (3) de la semi-remorque en position de verrouillage et qui comportent chacune un évidement semi-circulaire (9) pour saisir le pivot maître (3), caractérisé par un vérin hydraulique (6) qui fait pivoter les mâchoires (4) entre une position dans laquelle le pivot maître (3) est libéré et une position de verrouillage dans laquelle le pivot maître (3) est bloqué,
une tringle transversale (10) munie à ses extrémités de coulisseaux (11) qui coopèrent avec une rainure (12) aménagée dans chacune des mâchoires (4) étant montée sur la tige de piston d'actionnement (8) du vérin hydraulique (6) situé dans le plan de symétrie,
et le piston d'actionnement (7) du vérin hydraulique (6) étant soumis à une pression sur sa face avant et à l'action d'un ressort de verrouillage (40) sur sa face annulaire arrière côté tige,
et un conduit de décharge (54) commandé par un tiroir (43) étant prévu entre la chambre côté tête de piston (35) et la chambre côté tige de piston (37), le tiroir (43) pouvant se déplacer dans un alésage central (42) qui s'étend dans la direction axiale à l'intérieur du piston d'actionnement (7) et de la tige de piston (8) et libérant le conduit de décharge (54), dans sa position extrême antérieure par rapport au piston de commande (7),
et le tiroir présentant un prolongement formant butée (50) orienté vers l'avant qui fait saillie par rapport à la tête de piston dans sa position extrême relative antérieure et étant soumis, sur sa face frontale arrière, à l'action d'un ressort de poussée (48) dont l'autre extrémité prend appui sur un poussoir (30) qui est guidé en translation au centre de la tige de piston (8) et qui fait saillie à partir de l'extrémité postérieure de celle-ci dans la chambre du pivot maître (3).

2. Attelage à sellette selon la revendication 1, caractérisé par un collet (45) du poussoirs (30) qui forme, entre sa circonférence extérieure et la paroi de l'alésage central (42), un espace annulaire (46) qui agit comme un étranglement.

3. Attelage à sellette selon l'une des revendications 1 ou 2, caractérisé par un orifice de décharge (57) qui relie l'alésage central (42) de la tige de piston (8) à la chambre côté tige de piston (37) ainsi que par un orifice d'étranglement (56) situé plus loin vers l'avant qui relie également entre elles les deux chambres.

4. Attelage à sellette selon l'une ou plusieurs des revendications 1 à 3, caractérisé par un bouchon de mise à l'air libre (38) situé au point le plus élevé de la chambre côté tige de piston (37).

5. Attelage à sellette selon la revendication 4, caractérisé par le fait qu'une partie alésée de la chambre côté tige de piston (37) est aménagée au-dessous du bouchon de mise à l'air libre (38).

6. Attelage à sellette selon les revendications 4 ou 5, caractérisé par le fait qu'un insert en métal fritté filtrant l'air est monté dans le bouchon de mise à l'air libre (38).

7. Attelage à sellette selon l'une ou plusieurs des revendications précédentes, caractérisé par une pompe à main (20) pour l'alimentation en fluide sous pression du vérin hydraulique (6).

8. Attelage à sellette selon l'une ou plusieurs des revendications précédentes, caractérisé par un dispositif de verrouillage mécanique (15) pour fixer la position de verrouillage des mâchoires (4).

9. Attelage à sellette selon la revendication 8, caractérisé en ce que le dispositif de verrouillage mécanique (15) est composé d'une briffe (16) qui, dans la position de verrouillage, s'engage sur deux prolongements (19) qui sont formés chacun sur l'extrémité postérieure des mâchoires (4).

10. Attelage à sellette selon la revendication 9, caractérisé en ce que la griffe (16) est montée sur un axe pivotant (18) que l'on peut faire pivoter à l'aide d'un levier de commande manuelle et qui peut être amené en position active par rotation dudit axe.

Fig. 1

Fig. 2

Fig. 3

Fig. 4

Fig. 5

Fig. 6

Fig. 7

Fig. 8